# EUROPÄISCHE PATENTSCHRIFT

(11) **EP 1 285 637 B1**
(45) Veröffentlichungstag und Bekanntmachung des Hinweises auf die Patenterteilung: **29.03.2006**
(21) Anmeldenummer: 02016717.7
(22) Anmeldetag: 26.07.2002
(51) Int. Cl.: A61C 17/34

(54) **Elektrisches Zahnpflegegerät**
Electrical dental care device
Instrument électrique pour soins dentaires

(30) Priorität: 22.08.2001 DE 20113895 U
(43) Veröffentlichungstag der Anmeldung: 26.02.2003
(73) Patentinhaber: WIK Far East Ltd., North Point, Hong Kong (CN)
(72) Erfinder: Hafemann, Klaus, 45359 Essen (DE)
(74) Vertreter: Schröter, Martin

(56) Entgegenhaltungen:
- DE-A- 3 412 601
- DE-C- 19 521 302
- DE-U- 20 109 552
- US-A- 5 625 916

## Beschreibung

Die Erfindung betrifft ein elektrisches Zahnpflegegerät mit einem um eine Drehachse oszillierend angetriebenen Pflegekopf, der durch eine rotatorisch angetriebene Antriebswelle in Bewegung versetzbar ist, wobei die Antriebswelle an ihrem Abtriebsende ein exzentrisch zur Drehachse der Antriebswelle angeordnetes Antriebselement trägt, das zum Antreiben des Pflegekopfes in eine Ausnehmung eines die rotatorische Antriebskraft des Antriebselement in eine oszillierende Drehbewegung des Pflegekopfes umsetzenden Kraftumsetzer eingreift.

Elektromotorisch angetriebene Zahnpflegegeräte, etwa Zahnbürsten, sind bekannt, bei denen der als Bürstenkopf ausgebildete Pflegekopf um eine Drehachse oszillierend angetrieben ist. Der Pflegekopf ist an dem freien Ende eines Schaftes des Zahnpflegegerätes angeordnet, der mit seinem anderen Ende in ein Griffstück übergeht. In dem Griffstück ist unter anderem ein Elektromotor angeordnet, dessen Antriebswelle in dem Schaft gelagert ist. Ein solches Zahnpflegegerät ist beispielsweise in DE 34 12 601 C2 beschrieben. Die Antriebswelle des aus diesem Dokument bekannten Zahnpflegegerätes trägt an ihrem zum Pflegekopf weisenden Ende einen exzentrisch zur Antriebswelle angeordneten Antriebszapfen. Die Längsachse des Antriebszapfens ist gegenüber der Drehachse der Antriebswelle geneigt. Zum Umsetzen der rotatorischen Drehbewegung der Antriebswelle in eine oszillierende Bewegung des Pflegekopfes dient bei den in DE 34 12 601 C2 beschriebenen Gegenstand ein in eine rechtwinklig zu der in dem Schaft gelagerten Antriebswelle angeordnete Antriebswelle des Pflegekopfes eingebrachter axialer Spalt. Der mit seiner Längsachse geneigt angeordnete Antriebszapfen durchgreift diesen axialen Spalt. Die Antriebswelle des Pflegekopfes ist ihrerseits mehrfach in dem Schaft gelagert.

Eine Drehbewegung der Antriebswelle, die entsprechend von dem Antriebszapfen ebenfalls durchgeführt wird, resultiert durch den Eingriff des Antriebszapfens in den axialen Spalt der drehbar gelagerten Antriebswelle des Pflegekopfes in eine oszillierende Drehbewegung dieser Antriebswelle. Um eine solche Bewegung zu ermöglichen, ist die Länge des axialen Spaltes größer als der Durchmesser der von dem Antriebszapfen innerhalb des axialen Spaltes ausgeübten Kreisbewegung. Damit ein Antrieb des Pflegekopfes einwandfrei funktioniert, müssen sich die Drehachsen der in dem Schaft gelagerten Antriebswelle sowie der Antriebswelle des Pflegekopfes und die Längsachse des Antriebszapfens virtuell in einem Punkt schneiden. Überdies müssen die beiden Drehachsen rechtwinklig zueinander angeordnet sein. Bereits geringste Abweichungen von dieser Geometrie können zu einem erhöhten Verschleiß der an der Kraftumsetzung beteiligten Elemente oder zu einem Verkanten des Antriebszapfens in dem axialen Spalt führen. Um ein Spiel zwischen den miteinander in Eingriff stehenden Antriebselementen möglichst zu reduzieren, sind auch hohe Anforderungen an die Lagerung der Antriebswelle des Pflegekopfes sowie an die Lagerung der Antriebswelle in dem Schaft gestellt, wobei die äußere Lagerstelle der in dem Schaft angeordneten Antriebswelle sich in möglichst unmittelbarer Nähe zum Antriebszapfen befindet. Darüber hinaus sind hohe Anforderungen bezüglich einer Maß- und Toleranzgenauigkeit der in aller Regel im Wege eines Spritzgußverfahrens hergestellten Gehäuse- und Lagerteile gestellt.

Ausgehend von diesem diskutierten Stand der Technik liegt der Erfindung daher die Aufgabe zugrunde, ein eingangs genanntes gattungsgemäßes Zahnpflegegerät dergestalt weiterzubilden, daß die zum Stand der Technik aufgezeigten Nachteile vermieden sind.

Diese Aufgabe wird erfindungsgemäß dadurch gelöst, daß der Kraftumsetzer ein kardanisch gelagertes Umsetzelement umfaßt, in dem das in das Umsetzelement eingreifende Antriebselement gelagert ist, wobei die Drehachsen der beiden kardanischen Lagerungen des Umsetzelements einen rechten Winkel einschließend und sich virtuell in einem Punkt schneidend angeordnet sind und wobei das Umsetzelement von einem Halter, in dem das Umsetzelement um eine der beiden Drehachsen der kardanischen Lagerung schwenkbar gelagert ist, getragen ist und der Halter um die andere Drehachse der kardanischen Lagerung drehbar gelagert ist und den Pflegekopf trägt.

Dokument DE 19521302 (Spalte 3, z. 11-64) offenbart ein elektrisches Zahnpflagegerät gemäß dem Oberbegriff des Anspruchs 1.

Bei dem erfindungsgemäßen elektrischen Zahnpflegegerät ist das Umsetzelement kardanisch gelagert, so daß dieses um zwei Drehachsen bewegbar ist. Teil der kardanischen Lagerung ist ein Halter, der das Umsetzelement trägt und in dem das Umsetzelement um eine der beiden Drehachsen der kardanischen Lagerung schwenkbar ist. Der Halter selbst ist, beispielsweise in einem umgebenden Gehäuse drehbar gelagert und trägt den Pflegekopf. Das Antriebselement der Antriebswelle greift in eine Ausnehmung des Umsetzelementes ein und ist darin gelagert. Bei einer Drehbewegung der Antriebswelle und somit auch des Antriebselementes wird diese rotatorische Antriebsbewegung zerlegt in eine oszillierende Schwenkbewegung des Umsetzelementes um die Drehachse, mit der das Umsetzelement in dem Halter gelagert ist, und in eine oszillierende Drehbewegung des seinerseits gelagerten Halters um die andere Drehachse der kardanischen Lagerung. Durch Ausbilden definierter Lagerstellen zum Umsetzen der rotatorischen Antriebsbewegung besteht bei diesem Gegenstand nicht die Gefahr eines Verschleißes oder eines Verkantens. Da insbesondere das Antriebselement in dem Umsetzelement gelagert ist, braucht eine, wie beim vorbekannten Stand der Technik vorgesehene in unmittelbarer Nähe des Pflegekopfes angeordnete Lagerung der in dem Schaft befindlichen Antriebswelle grundsätzlich nicht vorgesehen sein. Vielmehr ist es ausreichend und auch zweckmäßig, wenn die Antriebswelle in dem Schaft nur an einer von dem Pflegekopf entfernten Position gelagert ist. Durch die Lagerung des Antriebselementes als Teil der Antriebswelle in dem Umsetzelement ist die Antriebswelle nach einem In-Eingriff-Stellen des Antriebselementes mit dem Umsetzelement auch an diesem Ende gelagert. Da die Antriebswelle erst nach ihrem Eingriff in dem Umsetzelement bestimmungsgemäß gelagert ist, können Toleranzen ohne weiteres aufgenommen und kompensiert werden. Folglich sind die Anforderungen an die bei der Herstellung der einzelnen Bauteile, insbesondere der Gehäuseteile einzuhaltende Toleranzen sehr viel geringer als beim vorbekannten Stand der Technik. Die Lagerung des Antriebselementes in dem Umsetzelement hat femer zur Folge, daß ein Verschleiß an dieser Stelle so gut wie vermieden ist.

In einer zweckmäßigen Ausgestaltung ist das Umsetzelement kugelartig ausgebildet und weist eine abgeflachte Unterseite auf. Die kugelartige Ausbildung zumindest des oberen Teils des Umsetzelementes dient als Abstützfläche, die zweckmäßigerweise in eine gewölbte Pfanne des Halters eingreift zum Abfangen von auf das Umsetzelement in dieser Richtung wirkenden Kräften. Die abgeflachte Ausbildung der Unterseite dient einer Bauraumreduzierung.

Gelagert sein kann das Umsetzelement durch zwei einander diametral gegenüberliegende angeformte Achsstummel, die jeweils in eine Lageröffnung des Halters eingreifen. Die Lageröffnungen können beispielsweise in zwei parallel zueinander angeordneten Armen des Halters angeordnet sein. Für den Fall, daß die Arme das Gehäuse des Bürstenkopfes durchgreifen und unmittelbar an eine Grundplatte angeschlossen und unterseitig nicht miteinander verbunden sind, ist es zweckmäßig, ein oder mehrere Begrenzungsglieder vorzusehen, die dergestalt angeordnet sind, daß ein Abziehen der Arme des Halters von den in diese eingreifenden Achsstummel des Umsetzelementes verhindert ist. Bei einem übermäßigen Zug auf den Halter, beispielsweise durch den Versuch des Abziehens des Pflegekopfes von dem Halter könnten sich ansonsten möglicherweise die Arme aufbiegen und das Umsetzelement freigeben.

Das Antriebselement der Antriebswelle kann beispielsweise nach Art eines Kugelkopfes ausgebildet sein. Ebenfalls ist es möglich, daß das Antriebselement ein Antriebszapfen ist, dessen Längsachse gegenüber der Drehachse der Antriebswelle geneigt ist und der in eine entsprechend geneigte Bohrung in das Umsetzelement eingreift. In diesem Fall sollte die Längsachse des Antriebszapfens den virtuellen Schnittpunkt schneiden, den die Drehachsen der kardanischen Lagerung des Umsetzelementes sowie die Drehachse der Antriebswelle bilden.

In einer bevorzugten Ausgestaltung ist das Zahnpflegegerät als Zahnbürste ausgebildet, wobei der Pflegekopf in einer rechtwinklig zur Drehachse des Halters angeordneten Ebene Borstenbüschel trägt. Die Längserstrekkung der Borstenbüschel verläuft im wesentlichen parallel zur Drehachse des Halters.

Nachfolgend ist die Erfindung anhand eines Ausführungsbeispiel unter Bezugnahme auf die beigefügten Figuren beschrieben. Es zeigen:
- **Fig. 1:**: einen Längsschnitt durch ein schematisiert dargestelltes Zahn- pflegegerät und
- **Fig. 2:**: einen Schnitt durch das Zahnpflegegerät der Fig. 1 entlang der Linie A - B

Eine elektrische Zahnbürste 1 als Zahnpflegegerät ist durch einen Elektromotor angetrieben, der in ein in den Figuren nicht dargestelltes Griffstück integriert ist. Durch den Elektromotor ist eine Antriebswelle 2 rotatorisch angetrieben. Die Antriebswelle 2 durchgreift einen Schaft 3, der den Griff der Zahnbürste 1 mit einem Bürstenkopf 4 als Pflegekopf verbindet. In dem Schaft 3 ist die Antriebswelle 2 im Bereich seines an den Griff grenzenden Endbereiches in einer Lagerhülse 5 gelagert.

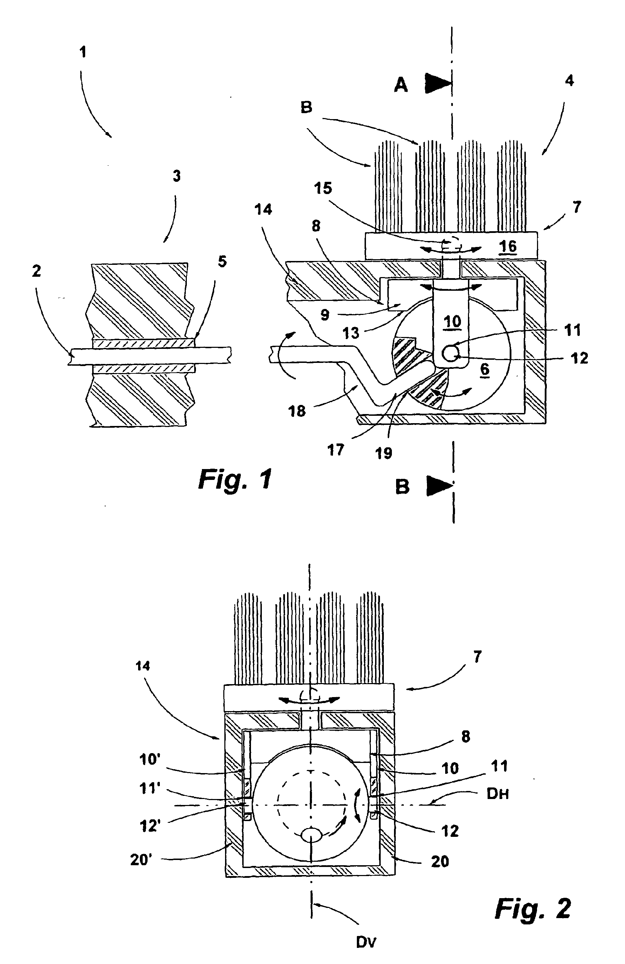

Der insgesamt mit dem Bezugszeichen 4 gekennzeichnete Bürstenkopf stellt das vordere freie Ende des Schaftes 3 dar. Innerhalb des Bürstenkopfes 4 ist ein Umsetzelement 6 zum Umsetzen der rotatorischen Drehbewegung der Antriebswelle 2 in eine oszillierende Drehbewegung der eigentlichen Bürste 7 angeordnet. Das Umsetzelement 6 ist in dem Bürstenkopf 4 kardanisch aufgehängt und wird durch einen Halter 8 getragen. Der Halter 8 ist gebildet durch ein oberes plattenartiges Element, von dem nach unten abragend in einer diametral gegenüberliegenden Anordnung zwei Arme 10, 10' (vgl. auch Figur 2) abragen. In den Armen 10, 10' ist jeweils eine Lageröffnung 11, 11' eingebracht, in denen jeweils ein Achsstummel 12, 12', angeformt an dem Umsetzelement 6 gelagert ist. Durch diese Lagerung ist das Umsetzelement um eine in den Figuren horizontal verlaufende Drehachse D_{H} verschwenkbar. Das Umsetzelement 6 ist insgesamt kugelartig ausgebildet und greift mit seinem oberen Bereich in die entsprechend komplementär gewölbt ausgebildete Unterseite 13 des plattenartigen Elementes 9 des Halters 8 ein. Der Halter 8 selbst ist drehbar in dem Gehäuse 14 des Bürstenkopfes 4 gelagert, so daß durch diese Lagerung die zweite kardanische und in dem dargestellten Ausführungsbeispiel vertikal verlaufende Drehachse D_{V} gebildet ist. Die beiden Drehachsen D_{H}, D_{V} sind rechtwinklig zueinander angeordnet. Der Halter 8 trägt einen oberen Fortsatz 15, an dem die Bürste 7 mit ihrer Grundplatte 16 drehfest befestigt ist. Die Grundplatte 16 trägt mehrere Borstenbüschel B.

An dem freien Ende der Antriebswelle 2 ist als Antriebselement ein Antriebszapfen 17 angeordnet, dessen Längsachse geneigt zur Drehachse der Antriebswelle 2 verläuft. Verbunden ist der Antriebszapfen 17 mit der Antriebswelle 2 durch eine Verkröpfung 18. Der Antriebszapfen 17 greift ein in eine zur Aufnahme des Antriebszapfens 17 vorgesehene und bei diesem Ausführungsbeispiel entsprechend geneigte Bohrung 19 des Umsetzelementes 6. Der Antriebszapfen 17 ist in der Bohrung 19 gelagert.

Bei einem Betrieb der Antriebswelle 2 in der in Figur 1 gezeigten Pfeilrichtung wird die rotatorische Drehbewegung der Antriebswelle 2 durch das Umsetzelement 6 zerlegt in zwei oszillierende Drehbewegungen um die beiden kardanischen Drehachsen D_{H} und D_{V}. Die den Antriebszapfen 17 der Antriebswelle 2 aufnehmenden Bohrung 19 des Umsetzelementes 6 beschreibt bei einem Betrieb der Antriebswelle 2 eine Kreisbahn. Diese Bewegung wird durch die kardanische Aufhängung des Umsetzelementes in eine oszillierende Drehbewegung des Umsetzelementes 6 um die Drehachse D_{H} sowie in eine Drehbewegung des Halters 8 einschließlich dem von dem Halter 8 getragenen Umsetzelement 6 und der Bürste 7 um die Drehachse D_{V} zerlegt.

Bei der in Figur 1 gezeigten In-Eingriff-Stellung zwischen der Antriebswelle 2 bzw. ihrem Antriebszapfen 17 und dem Umsetzelement 6 schneidet die Längsachse des Antriebszapfens 17 die beiden Drehachsen D_{H}, D_{V} in ihrem virtuellen Schnittpunkt. Durch die in Figur 1 gezeigte Lagerung der Antriebswelle 2 über Ihren Antriebszapfen 17 in der Bohrung 19 des Umsetzelementes ist diese bürstenkopfseitig ausreichend gelagert. Eine weitere Lagerung der Antriebswelle 2 im Bereich des Bürstenkopfes 4 ist somit nicht notwendig. Daher ist die Antriebswelle 2 der Zahnbürste 1 in dem Schaft 3 nur an einer einzigen Stelle - wie oben beschrieben - gelagert. Ist die Antriebswelle in dem Griff der Zahnbürste gelagert, braucht grundsätzlich eine weitere Lagerung innerhalb des Schaftes auch nicht vorgesehen sein.

Das Gehäuse 14 des Bürstenkopfes 4 ist im Bereich der beiden Arme 10, 10' relativ eng ausgebildet, damit ein Abziehen der Arme 10, 10' von den Achsstummeln 12, 12' vermieden ist. Eine solche Ausgestaltung ist insbesondere dann zweckmäßig, wenn die Arme des Halters durch das Gehäuse des Bürstenkopfes hindurchgeführt sind und unmittelbar mit der Grundplatte der Bürste verbunden sind. Es stellen dann die Seitenwände 20, 20' des Gehäuses 14 Begrenzungsglieder für die Arme 10, 10' des Halters 8 dar. Die Seitenwände 20, 20' sind so konzipiert, daß diese einen gleichbleibenden Abstand zu den Außenseiten der Arme 10, 10' über den gesamten Verschwenkbetrag der Arme 10, 10' um die Drehachse D_{V} aufweisen. Anstelle einer Ausbildung der Seitenwände 20, 20' als Begrenzungsglieder kann in dem Gehäuse 14 ebenfalls ein entsprechender gegebenenfalls geöffneter Ring als Begrenzungsglied angeordnet sein.

### Bezugszeichenliste

- 1: Zahnbürste
- 2: Antriebswelle
- 3: Schaft
- 4: Bürstenkopf
- 5: Lagerhülse
- 6: Umsetzelement
- 7: Bürste
- 8: Halter
- 9: plattenartiges Element
- 10, 10': Arm
- 11, 11': Lageröffnung
- 12, 12': Achsstummel
- 13: Unterseite
- 14: Gehäuse
- 15: Fortsatz
- 16: Grundplatte
- 17: Antriebszapfen
- 18: Verkröpfung
- 19: Bohrung
- 20, 20': Seitenwand

- B: Bürstenbüschel
- D_{H}: Drehachse
- D_{V}: Drehachse

## Patentansprüche

1. Elektrisches Zahnpflegegerät mit einem um eine Drehachse (D_{V}) oszillierend angetriebenen Pflegekopf (7), der durch eine rotatorisch angetriebene Antriebswelle (2) in Bewegung versetzbar ist, wobei die Antriebswelle (2) an ihrem Abtriebsende ein exzentrisch zur Drehachse der Antriebswelle (2) angeordnetes Antriebselement (17) trägt, das zum Antreiben des Pflegekopfes (7) in eine Ausnehmung eines die rotatorische Antriebskraft des Antriebselements (17) in eine oszillierende Drehbewegung des Pflegekopfes (7) umsetzenden Kraftumsetzer eingreift, wobei der Kraftumsetzer ein kardanisch gelagertes Umsetzelement (6) umfaßt, in dem das in das Umsetzelement (6) eingreifende Antriebselement (17) gelagert ist, wobei die Drehachsen (D_{H}, D_{V}) der beiden kardanischen Lagerungen des Umsetzelements (6) sich virtuell in einem Punkt schneidend angeordnet sind und wobei das Umsetzelement (6) von einem Halter (8), in dem das Umsetzelement (6) um eine der beiden Drehachsen (D_{H}) der kardanischen Lagerung schwenkbar gelagert ist, getragen ist und der Halter (8) um die andere Drehachse (D_{V}) der kardanischen Lagerung drehbar gelagert ist und den Pflegekopf (7) trägt, **dadurch gekennzeichnet**, daβ die Drehachsen der beidenkardamischen Lagerungen des Umsetzelement (6) einen rechten Winkel einschließen.

2. Zahnpflegegerät nach Anspruch 1, **dadurch gekennzeichnet, daß** das Umsetzelement (6) kugelartig mit einer abgeflachten, von dem Pflegekopf (7) wegweisenden Unterseite ausgebildet ist.

3. Zahnpflegegerät nach Anspruch 2, **dadurch gekennzeichnet, daß** die dem Pflegekopf (7) zugewandte Seite des kugelartig ausgebildeten Umsetzelementes (6) zu seiner Führung in eine gewölbte Unterseite (13) des Halters (8) eingreift.

4. Zahnpflegegerät nach Anspruch 1, 2 oder 3, **dadurch gekennzeichnet, daß** das Umsetzelement (6) einander diametral gegenüberliegende angeformte Achsstummel (12, 12') trägt, die in jeweils eine Lageröffnung (11, 11') des Halters (8) eingreifen.

5. Zahnpflegegerät nach Anspruch 4, **dadurch gekennzeichnet, daß** die Lageröffnungen (11, 11') des Halters (8) in Armen (10, 10') angeordnet sind und daß ein oder mehrere Begrenzungsglieder (20, 20') vorgesehen sind, durch die ein Abziehen der Arme (10, 10') von den in diese eingreifenden Achsstummeln (12, 12') des Umsetzelements verhindert ist.

6. Zahnpflegegerät nach einem der Ansprüche 1 bis 5, **dadurch gekennzeichnet, daß** der Halter (8) in dem Gehäuse (14) des Zahnpflegerätes (1) und die Antriebswelle (2) in einem dem Zahnpflegegerät (1) zugeordneten Schaft (3) nur an einer von dem Pflegekopf (7) deutlich beabstandeten Stelle gelagert ist.

7. Zahnpflegegerät nach einem der Ansprüche 1 bis 6, **dadurch gekennzeichnet, daß** das exzentrisch zur Antriebswelle (2) angeordnete Antriebselement ein Antriebszapfen (17) ist, dessen Längsachse zur Drehachse der Antriebswelle (2) geneigt ist und der über eine Verkröpfung (18) mit der Antriebswelle (2) verbunden ist, und daß der Antriebszapfen (17) in eine entsprechend geneigt ausgebildete Bohrung (19) des Umsetzelements (6) eingreift.

8. Zahnpflegegerät nach Anspruch 7, **dadurch gekennzeichnet, daß** die Längsachse des Antriebszapfens (17) den virtuellen Schnittpunkt schneidet, den die Drehachsen (D_{H}, D_{V}) der kardanischen Lagerung des Umsetzelementes bilden.

9. Zahnpflegegerät nach einem der Ansprüche 1 bis 8, **dadurch gekennzeichnet, daß** der Pflegekopf (20) in einer rechtwinklig zur Drehachse (D_{V}) des Halters (8) angeordneten Ebene Borstenbüschel (3) trägt, die sich im wesentlichen parallel zur Drehachse (D_{V}) des Halters (8) erstrecken.

## Claims

1. Electric dental care device having a care head (7) driven oscillating about a rotational axis (D_{V}) and able to be set in motion by a rotating drive shaft (2), the drive shaft (2) bearing at its output end a driving element which is arranged eccentrically with respect to the rotational axis of the drive shaft (2) and which, for driving the care head (7), engages in a recess of a force converter which converts the rotary driving force of the driving element (17) into an oscillating rotary movement of the care head (7), the force converter including a gimbal-mounted conversion element (6) in which the driving element (17) engaging in the conversion element (6) is mounted, the rotational axes (D_{H}, D_{V}) of the two gimbal bearings of the conversion element (6) being arranged virtually intersecting at a point and the conversion element (6) being supported by a mounting (8) in which the conversion element (6) is mounted so as to be pivotable about one of the two rotational axes (D_{H}) of the gimbal bearing, and the mounting being mounted so as to be rotatable about the other rotational axis (D_{V}) of the gimbal bearing and bearing the care head (7), **characterised in that** the rotational axes of the two gimbal bearings of the conversion element (6) enclose a right angle.

2. Dental care device according to claim 1, **characterised in that** the conversion element (6) is designed spherical with a flattened underside which points away from the care head (7).

3. Dental care device according to claim 2, **characterised in that** the side of the spherical conversion element (6) which faces the care head (7) engages for its guidance in an arched underside (13) of the mounting (8).

4. Dental care device according to claim 1, 2 or 3, **characterised in that** the conversion element (6) bears axle stubs (12, 12') which are integrally moulded diametrically facing one another and which each engage in a bearing opening (11, 11') of the mounting (8).

5. Dental care device according to claim 4, **characterised in that** the bearing openings (11, 11') of the mounting (8) are arranged in arms (10, 10'), and **in that** one or more limiting members (20, 20') are provided, by which pulling of the arms (10, 10') away from the axle stubs (12, 12') of the conversion element which engage in them is prevented.

6. Dental care device according to one of claims 1 to 5, **characterised in that** the mounting (8) is mounted in the housing (14) of the dental care device (1), and the drive shaft (2) is mounted in a shank (3) associated with the dental care device (1) only at a location which is at a significant spacing from the care head (7).

7. Dental care device according to one of claims 1 to 6, **characterised in that** the driving element which is arranged eccentrically with respect to the drive shaft (2) is a driving pivot (17), the longitudinal axis of which is inclined with respect to the rotational axis of the drive shaft (2) and which is connected via a crank (18) to the drive shaft (2) and **in that** the driving pivot (17) engages in a correspondingly inclined bore (19) of the conversion element (6).

8. Dental care device according to claim 7, **characterised in that** the longitudinal axis of the driving pivot (17) intersects the virtual intersection which is formed by the rotational axes (D_{H}, D_{V}) of the gimbal bearing of the conversion element.

9. Dental care device according to one of claims 1 to 8, **characterised in that** the care head (20) bears, in a plane arranged at right angles to the rotational axis (D_{V}) of the mounting (8), bristle tufts which extend substantially parallel to the rotational axis (D_{V}) of the mounting (8).

## Revendications

1. Instrument électrique pour soins dentaires constitué d'une tête de soins (7), entraînée de manière oscillante autour d'un axe de rotation (D_{V}), laquelle peut être actionnée au moyen d'un arbre d'entraînement (2) entraîné de manière rotative, l'arbre d'entraînement (2) supportant à son extrémité de sortie un élément d'entraînement (17), disposé de manière excentrée par rapport à l'axe de rotation de l'arbre d'entraînement (2), qui s'engage, afin d'entraîner la tête de soins (7), dans un évidement d'un convertisseur de forces qui transpose la force d'entraînement rotative de l'élément d'entraînement (17) en un mouvement rotatif oscillant de la tête de soins (7), le convertisseur de forces comprenant un élément convertisseur (6) monté à la Cardan dans lequel est logé l'élément d'entraînement (17) qui s'engage dans l'élément convertisseur (6), les axes de rotation (D_{H}, D_{V}) des deux paliers à la Cardan de l'élément convertisseur (6) étant disposés pour se recouper virtuellement en un point et l'élément convertisseur (6) étant supporté par une fixation (8) dans laquelle est logé, de manière pivotante, sur l'un des deux axes de rotation (D_{H}) du palier à la Cardan, l'élément convertisseur (6) et laquelle fixation (8) étant logée de manière rotative sur l'autre axe de rotation (D_{V}) du palier à la Cardan et supportant la tête de soins (7), **caractérisé en ce que** les axes de rotation des deux paliers à la Cardan de l'élément convertisseur (6) entourent un angle droit.

2. Instrument pour soins dentaires selon la revendication 1 **caractérisé en ce que** l'élément convertisseur (6) est conformé à la manière d'une sphère et présente une face inférieure se détournant de la tête de soins (7) rendue plane.

3. Instrument pour soins dentaires selon la revendication 2 **caractérisé en ce que** la face orientée vers la tête de soins (7) de l'élément convertisseur (6) conformé à la manière d'une sphère s'engage, afin de guider cette dernière, dans la face inférieure (13) voûtée de la fixation (8).

4. Instrument pour soins dentaires selon la revendication 1, 2 ou 3 **caractérisé en ce que** l'élément convertisseur (6) supporte des bouts d'axe (12, 12') moulés, diamétralement opposés l'un à l'autre, qui s'engagent chacun dans une ouverture de maintien (11, 11') de la fixation (8).

5. Instrument pour soins dentaires selon la revendication 4 **caractérisé en ce que** les ouvertures de maintien (11, 11') de la fixation (8) sont disposées dans des bras (10, 10') et qu'il est prévu un ou plusieurs éléments limiteurs (20, 20') qui empêchent le retrait des bras (10, 10') des bouts d'axe (12, 12') de l'élément convertisseur qui s'engagent dans ces derniers.

6. Instrument pour soins dentaires selon l'une des revendications 1 à 5 **caractérisé en ce que** la fixation (8) est logée dans le boîtier (14) de l'instrument pour soins dentaires (1) et l'arbre d'entraînement (2), dans une tige (3) affectée à l'instrument pour soins dentaires (1), en un seul endroit nettement éloigné de la tête de soins (7).

7. Instrument pour soins dentaires selon l'une des revendications 1 à 6 **caractérisé en ce que** l'élément d'entraînement disposé de manière excentrique par rapport à l'arbre d'entraînement (2) est un tourillon d'entraînement (17) dont l'axe longitudinal est incliné par rapport à l'axe de rotation de l'arbre d'entraînement (2) et qui est relié par un recourbement (18) à l'arbre d'entraînement (2), et **en ce que** le tourillon d'entraînement (17) s'engage dans un perçage (19) incliné de manière adéquate dans l'élément convertisseur (6).

8. Instrument pour soins dentaires selon la revendication 7 **caractérisé en ce que** l'axe longitudinal du tourillon d'entraînement (17) coupe le point de recoupement virtuel, qui est formé par les axes de rotation (D_{H}, D_{V}) du palier à la Cardan de l'élément convertisseur.

9. Instrument pour soins dentaires selon l'une des revendications 1 à 8 **caractérisé en ce que** la tête de soins (20) supporte, selon un plan disposé perpendiculairement par rapport à l'axe de rotation (D_{V}) de la fixation (8), des touffes de poils (3) qui s'étendent de manière sensiblement parallèle à l'axe de rotation (D_{V}) de la fixation (8).
